# EUROPEAN PATENT APPLICATION

(11) **EP 1 903 688 A1**
(43) Date of publication of application: **26.03.2008**
(21) Application number: 06120880.7
(22) Date of filing: 19.09.2006
(51) Int. Cl.: H04B 5/02

(54) **Connector device**

(71) Applicant: SAAB AB, 581 88 Linköping (SE)
(72) Inventor: Åkerlund, Hans, 413 08 Göteborg (SE)
(74) Representative: Norberg, Charlotte

(57) **Abstract**

The present invention relates to a connector device (3) comprising a first connector part (2) operatively connectable to a first external unit (1) and a second connector part (5) operatively connectable to a second external unit (4). The first connector part (2) is connectable to said second connector part (5) enabling communication between the first and second external units(1, 4). The connector device is characterized in that each connector part (2,5) comprises a surface in which a plurality of transmitting/receiving areas are formed, in that the first connector part (2) is connectable to the second connector part (5) via said transmitting/receiving areas, and in that at least the first connector part (2) comprises a first processing unit (7) operatively connected to the plurality of transmitting/receiving areas. The processing unit (7) is arranged to detect a first subset of transmitting/receiving areas in communication with a corresponding second subset of receiving/transmitting areas in the second connector part and to control communication between the first and second external units (1, 4) over said first subset of transmitting/receiving areas.

## Description

The present invention relates to a connector device comprising a first connector part operatively connectable to a first external unit and a second connector part operatively connectable to a second external unit, wherein said first connector part is connectable to said second connector part enabling communication between the first and second external units.

A conventional connector device for electrical connection comprises characteristically a male contact and a female contact. However, in some applications, the step of plugging the male contact in the female contact is undesirable. This is the case in communication of data between a weapon and a soldier holding the weapon, for example in transmission of data from the sensors of the pistol to a computer and displays of the soldier. The sensor data may include broadband signals, such as video signals from a video camera disposed at the barrel of the weapon. It is in this application desired to start communicate data directly when the soldier grabs the grip of the weapon.

Thus, one object of the present invention is to provide a connection which does not require a "plug in" step, and which can be used in broadband communication.

This has in one example been achieved by means of a connector device comprising a first connector part operatively connectable to at least one first external unit and a second connector part operatively connectable to at least one second external unit, wherein said first connector part is connectable to said second connector part enabling communication between the first and second external units. The connector device is characterized in that each connector part comprises a surface in which a plurality of transmitting/receiving areas are formed, in that the first connector part is connectable to the second connector part via said transmitting/receiving areas, and in that at least the first connector part comprises a first processing unit operatively connected to the plurality of transmitting/receiving areas, said processing unit being arranged to detect a first subset of transmitting/receiving areas in communication with a corresponding second subset of receiving/transmitting areas in the second connector part and to control communication between the first and second external units over said first subset of transmitting/receiving areas.

Thus, with the present invention as defined above, contact is established as soon as the surfaces of the connector parts lie against each other. If the first subset of transmitting/receiving areas in communication with a corresponding second subset of receiving/transmitting areas includes many transmitting/receiving areas, the bandwidth is large, while if the first subset includes fewer transmitting/receiving areas, the bandwidth of the broadband connection becomes smaller. The continuous monitoring of the transmitting/receiving areas will allow signals to be transmitted even though the surfaces move in relation to each other. The device will use the momentarily available signal transmitting areas to transmit information.

The transmitting/receiving areas and receiving/transmitting areas are for example electrically or optically conductive providing for electrical or optical communication between the first and second connector parts. Alternatively, the transmitting/receiving areas comprises short range radio transmitters.

In one embodiment of the invention, the first processing unit comprises a transmitting part arranged to divide at least one signal from the first external unit into a plurality of packages and to control the transmission of packages over said first subset of transmitting/receiving areas. Accordingly, at least the second connector part comprises a second processing unit comprising a reception part arranged to put together packages received via the second subset of receiving/transmitting areas to the at least one signal.

The transmitting part is then preferably arranged to associate to each package information related to its position in the at least one signal and the reception part is arranged to put together packages to the at least one signal in accordance with the position information associated to each package. The position information is for example an identity code.

In one preferred embodiment of the present invention, the transmitting/receiving areas in one of the connector parts are formed in a soft material. The soft material is for example a textile. In one example, magnets are disposed in the soft material. This is advantageous in a case wherein the contacting areas bearing surface of the other connector part is magnetic.

Further, one or both of the connector parts comprises in one embodiment of the invention at least one heating element arranged to heat the surface of the connector part. This is advantageous with electrically conducting areas in a moist environment, wherein the heat dries the surface, preventing the occurrence of short-circuits between the conducting areas of the surface.

### SHORT DESCRIPTION OF THE DRAWING

Fig1 shows an example of a connector device arranged to connect a first and a second external unit.

Fig 2 shows an example of a connecting plate in the connector device in fig 1.

Fig 3 shows an example of a processing unit in the connector device in fig 1.

Fig 4 shows an example of the design of the surfaces of the connecting plates in fig 2.

### DETAILED DESCRIPTION OF PREFERRED EMBODIMENTS

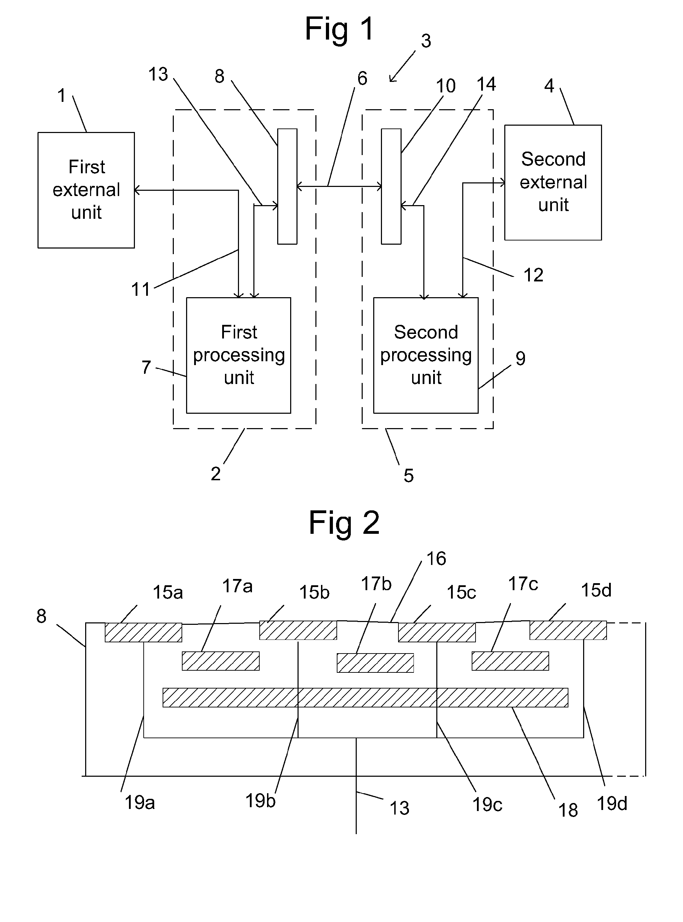

In fig 1, one or more first external units 1 are operatively connected to a first connector part 2 of a connector device 3. One or more second external units 4 are in the same way operatively connected to a second connector part 5 of the connector device 3. The first and second connector parts 2, 5 of the connector device 3 are connectable to each other via a communication line 6 enabling communication between the first and second external units 1, 4. The first connector part 2 comprises a first processing unit 7 and a first plate 8. The second connector part 5 comprises a second processing unit 9 and a second plate 10. The first processing unit 7 is arranged to receive signals from the first external unit 1 and to transmit signals to the first external unit 1 via a first user data communication line 11. The second processing unit 9 is arranged to receive signals from the second external unit 4 and to transmit signals to the second external unit 4 via a second user data communication line 12. The first processing unit 7 is connected to the first plate 8 via a first user data and control data communication line 13. The second processing unit 9 is connected to the second plate 10 via a second user data and control data communication line 14. Each respective plate has a surface, in which a plurality of conducting areas are formed (see fig 2) ending the above described respective user and control data communication line. The processing units 7, 9 are arranged to transmit test- and identification signals via the user and control data communication lines 13, 14 to the conduction areas in order to determine a subset of conducting areas currently coupled to a corresponding subset of conducting areas in the other connector part, if any. Based on the number of areas in said subset of conducting areas, the available bandwidth of the communication line between the first and second connector parts 2, 5 can be determined. Each processor unit 7, 9 is further arranged to control communication between the first and second external units 1, 4 over said subset of conducting areas using the available bandwidth.

In one example, the processing units 7, 9 have three modes of operation. In a first mode of operation, a rest mode, the processing unit is arranged to only monitor whether there is a contact between the conducting areas of the corresponding plate and any other surface. In a second mode of operation, a starting mode, the processing unit is arranged to examine the available bandwidth. When the available bandwidth has been determined, the processing unit can change into a third mode of operation, a transmission mode. In said transmission mode, the processing unit is arranged to distribute data to the conducing areas in communication with the other connector part. The system will continuously shift between the second and third modes, or all three modes, during operation in order to monitor the available bandwidth. This ensures continued transmission with the whole available bandwidth. Thus, when the contact surfaces are displaced in relation to each other, the new set of conducting areas in communication with the other connector part is detected and transmission is performed via the newly detected set of conducting areas. High bandwidth can thus be achieved without the requirement of a determined fixed relation between the contact surfaces of the connector parts.

In fig 2, for the sake of providing a clear description, reference is made to the first plate 8. However, the description is also adequate for the second plate 10. The plate 8 comprises the conducting areas 15a, 15b, 15c, 15d, as discussed above, formed in a surface 16 of the plate. In the shown example, four conducting areas are formed in the surface 16 of the plate. Each conducting area 15a, 15b, 15c, 15d is connected to the first user and control data communicating line 13 via conducting line parts 19a, 19b, 19c, 19d. The conducting line parts 19a, 19c, 19d continue in one example as separate cables in the first user and control data communication line 13 to connect to separate communication ports (not shown) in the first processing unit 7. In an alternative example, the separate cables connect to the first processing unit 7 via a multiplexing arrangement (not shown). In yet another example, the conducting line parts 19a, 19c, 19d are connected to the first user and control data communication line 13 via said multiplexing arrangement.

In one example, the first plate 8 is for example made of a rigid material, such as a non-conducting metal. The second plate 10 is in one example made of a soft, flexible material such as a textile. In another example, both of the plates 8, 10 are made of a rigid material and in yet another example, both of the plates 8, 10 are made of a soft, flexible material. The shown, first plate 8 is provided with magnets 17a, 17b, 17c disposed in the surface 16. This is suitable in a case wherein the not shown second plate 10 is made of a magnetic metal and the shown first plate 8 a soft, flexible material. The magnets 17a, 17b, 17c are then arranged to attract to the metal of the other plate and thereby provide coupling between the plates. In an alternative example, magnets are provided in both plates 8 and 10. In yet another example, no magnets are provided in the plates 8 and 10.The shown plate is further provided with a heating element 18 arranged to heat the surface 16. The heating of the surface 16 may be preferred in a moist environment in order to remove moisture between the conducting areas 15a, 15b, 15c, 15d.

In one example, the user and control data communication line 13 and the conducting line parts 19a, 19b, 19c, 19d connecting to the conducting surfaces 15a, 15b, 15c, 15d are made of an optical fibre and the conducting areas 15a, 15b, 15c, 15d are also constituted by said optical fibre material. The light is then emitted by the conducting areas 15a, 15b, 15c, 15d in communication with the second conductor part 5 so as to be received by the conducting areas of the optical fibre material of the second conductor part 5. In accordance with this example, the communication line 6 between the first and second plates 8, 10 does even not require a physical connection between the conducting areas of the first and second plates 8, 10 in order to provide coupling between the first and second connector parts 2, 5.

In another example, the connection lines are electrical cables and the conducting areas are arranged to conduct electrical signals.

In another example, each optically or electrically conducting area 15a, 15b, 15c, 15d is replaced with a very short range radio transmitter, in a two-way communication example supplemented with a corresponding very short ranged radio receiver. The range of the transmitter/receiver is chosen such that when the surfaces of the connector parts 2, 5 lie against each other, the transmission only reaches a substantially directly opposing radio receiver.

In another example, the conducting areas comprise a combination of electrically conducting areas and/or optically conducting areas and/or very short range radio transmitters.

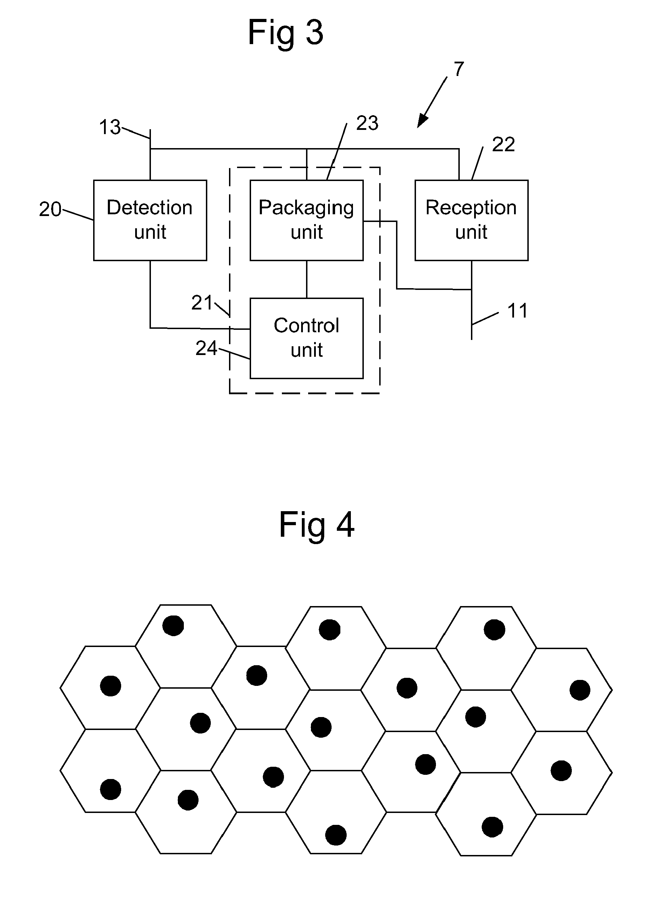

In fig 3, reference is made to the first connector part 2 for the sake of providing a clear description. However, the description is also adequate for the second connector part 5. The first processing unit 7 of the first connector part 2 comprises a detection unit 20, a transmission unit 21 and a reception unit 22. The detection unit 20 is arranged to determine the subset of conducting areas 15a, 15b, 15c, 15d currently coupled to a corresponding subset of conducting areas in the second connector part 5, as stated above. Above all, this is applicable in the first and second modes of operations wherein contact is established with the second connector part 5; however, when operating in the third mode of operation, the process can go back to the first and/or second modes of operations in order to secure that the contact is still established and/or to adapt the transmission over the communication line 6 to displacements of the plates 8, 10 in relation to each other. The detection unit 21 is further arranged to determine the available bandwidth based on the properties of the subset of conducting areas. In one example, the detection unit 20 is further arranged to detect short-circuiting between the conducting areas 15a, 15b, 15c, 15d and to control the heating element 18 so as to activate the heating element 18 upon detection of short-circuiting.

The transmission unit 21 is arranged to receive signals from the first external unit 1 via the first user data communication line 11. The received signals are divided into packages in a packaging unit 23 and the transmission of packages is performed over the user and control data communication line 13 over the first subset of conducting areas under the control of a transmission control unit 24. In one example, the packaging unit 23 is arranged to associate information to each package related to its position in the signal. The position information is for example an identity code. The transmission unit comprises in one example algorithms arranged to determine what data shall be transmitted, to allow so called "graceful degradation" of the transmitted signals if the bandwidth is not sufficient to transmit all data. Accordingly, it is for example possible to lower the image rate and/or image resolution in the signals. The specific application of the first external unit determines which signals are most critical to transmit. Thus each application will be associated to its own algorithms to enable optimization of the graceful degradation.

The reception unit 22 is arranged to put together packages received via the connector line to the at least one signal in accordance with the position information associated to each package. The re-constructed signal is then transmitted to the first external unit 1 via the first user data communication line 11.

The first processing unit 7 may be built up by clusters of processors. The processors may be provided with parallel and/or separate connections to the conductive areas to improve bandwidth and redundancy. The units 20, 22, 23 and 24 may be implemented as software programs in one or more physical processor units.

In fig 4 an example of the design of the surfaces of the plates is illustrated. In the shown example, the conducting areas of the first plate 8 are depicted as hexagons and the conducting areas of the second plate 10 are depicted as dots. The distance between the conducting areas and the size of the conducting areas is optimized such that the probability of providing a plurality separate connections is maximized while the risk of short-circuiting of two conducing areas on the same plate is minimized. The process of optimizing the conducting area pattern of the first plate 8 and the second plate 10 involves normal steps to a person skilled in the art and does not form part of the present invention. Further, the spaces between the contacting areas are formed so as to secure isolation and so as to minimize the risk of short-circuiting due to water drops between the conducting areas.

In an alternative example (not shown), a plurality of conducting areas are formed in the surface of the first plate while a smaller number of conducting areas are formed in the second plate. In one example, the conducting areas of the second plate are enlarged in relation to the conducting areas of the first plate so as to cover more than one conducting area of the first plate. For example, one large conducting areas can be formed on the surface of the second plate.

The example presented above with reference to figures 1-4 concerns an example with two-way communication between the first and second external units, wherein the first and second processing units 7, 9 both are arranged to perform the function described in relation to fig 3. In an alternative example (not shown), with one-way communication, the processing unit of the connector part arranged to perform transmission does not require the reception unit 22. Correspondingly, the processing unit of the connector part arranged to perform reception does not require the transmission unit 21 and the detection unit 20.

In one one-way communication example, the external unit connected to the connector part arranged to perform transmission is a camera or a video camera while the receiving connector part for example is a computer or an eye display. In one application the connector device 3 is used in transmission between a weapon and a soldier. In one example, wherein the weapon is a pistol, the surface 16 with transmitting conducting areas 15a, 15b, 15c, 15d is arranged on the pistol grip while the surface with the receiving conducting areas is arranged on the glove of the soldier. When the soldier grabs the pistol grip, information is transmitted from the sensors of the pistol to the computer and displays of the soldier via the connector device 3. The connector device 3 can also be used for user control. In this case, user identity information is transmitted in the opposite direction from the glove to the weapon. The weapon can then be arranged so as to function only upon reception of correct identity information.

Another application for the connector device 3 is in communication between a vehicle and its driver. In one example, the vehicle is a motorbike. The connector device 3 is then for example used for communicating sensor data from the motorbike to the driver or for providing a start lock. The information can be communicated for example via the throttle twist-grip or the seat. In another example the vehicle is an aircraft and in another example the vehicle is a four wheeled vehicle such as a car or a truck.

Yet another application for the connector device 3 is as a key. The connector device can then be used for transmission of code keys between a user and a door lock.

## Claims

1. Connector device (3) comprising a first connector part (2) operatively connectable to a first external unit (1) and a second connector part (5) operatively connectable to a second external unit (4), wherein said first connector part (2) is connectable to said second connector part (5) enabling communication between the first and second external units(1, 4), **characterized in that** each connector part (2,5) comprises a surface (16) in which a plurality of transmitting/receiving areas (15a, 15b, 15c, 15d) are formed, **in that** the first connector part (2) is connectable to the second connector part (5) via said transmitting/receiving areas (15a, 15b, 15c, 15d), and **in that** at least the first connector part (2) comprises a first processing unit (7) operatively connected to the plurality of transmitting/receiving areas (15a, 15b, 15c, 15d), said processing unit (7) being arranged to detect a first subset of transmitting/receiving areas in communication with a corresponding second subset of receiving/transmitting areas in the second connector part and to control communication between the first and second external units (1, 4) over said first subset of transmitting/receiving areas.

2. Connector device according to claim1, **characterized in that** the first processing unit (7) comprises a transmitting unit (21, 23, 24) arranged to divide at least one signal from the first external unit (1) into a plurality of packages and to control the transmission of packages over said first subset of transmitting/receiving areas.

3. Connector device according to claim 2, **characterized in that** at least the second connector part (5) comprises a second processing unit (9) comprising a reception unit (22) arranged to put together packages received via the second subset of receiving/transmitting areas to the at least one signal.

4. Connector device according to claim 3, **characterized in that** the transmitting unit (21, 23, 24) is arranged to associate to each package information related to its position in the at least one signal and **in that** the reception unit (22) is arranged to put together packages to the at least one signal in accordance with the position information associated to each package.

5. Connector device according to claim 4, **characterized in that** the position information is an identity code.

6. Connector device according to claim 1, **characterized in that** the surface (16) of at least one of the connector parts (2, 5) is formed in a soft material.

7. Connector device according to claim 6, **characterized in that** the soft material is a textile.

8. Connector device according to claim 6, **characterized in that** magnets (17a, 17b, 17c) are disposed in the soft material.

9. Connector device according to claim 1, **characterized in that** one of the connector parts (2, 5) comprises at least one heating element (18) arranged to heat the surface (16) of the connector part (2, 5).

10. Connector device according to claim 1, **characterized in that** the transmitting/receiving areas and receiving/transmitting areas comprises an electrically or optically conducting part.

11. Connector device according to claim 1, **characterized in that** the first processing unit (7) is arranged to work in a first mode of operation, a second mode of operation or a third mode of operation, and to switch between said modes of operation an accordance with a predetermined scheme, wherein the first processing unit (7) is arranged to
- monitor whether there is a contact between the transmitting/receiving areas of the corresponding plate and any other receiving/transmitting areas in the first mode of operation,
- examine the available bandwidth in the second mode of operation,
- distribute data to the first subset of transmitting/receiving areas in the third mode of operation.
